# EUROPEAN PATENT SPECIFICATION

(11) **EP 1 717 131 B1**
(45) Date of publication and mention of the grant of the patent: **02.01.2008**
(21) Application number: 06004786.7
(22) Date of filing: 08.03.2006
(51) Int. Cl.: B62D 25/16, B60R 21/34

(54) **Fender garnish structure**
Verkleidungsteil für einen Kotflügel
Elément de garniture pour aile de véhicule

(30) Priority: 28.04.2005 JP 2005132648
(43) Date of publication of application: 02.11.2006
(73) Proprietor: Honda Motor Co., Ltd., Tokyo (JP)
(72) Inventor: Nushii, Hiro c/o Honda R & D Co., Ltd., Saitama, 351-0193 (JP); Morino, Tetsuya c/o Honda R & D Co., Ltd., Saitama, 351-0193 (JP); Ikeuchi, Toshiyuki c/o Honda R & D Co., Ltd., Saitama, 351-0193 (JP)
(74) Representative: Rupp, Christian

(56) References cited:
- EP-A- 1 293 417
- DE-A1- 10 063 582
- DE-A1- 10 257 857
- US-A1- 2002 060 474

## Description

The present invention relates to a fender garnish structure aimed to improve the appearance of an area around an engine room in a vehicle.

In order to enhance the appearance of an area around an engine room in a vehicle, fender garnishes are being widely used in recent years. A fender garnish covers a flange formed on the upper, inner side of a fender of a vehicle. A typical example of fender garnishes is described in Japanese Examined Patent Application Publication 3518166. This fender garnish is installed in a space between a fender and a rear corner of a hood, and covers the part of an engine room, thereby improving the appearance of an area around the engine room.

Disadvantageously, the above fender garnish is prone to hinder the vehicle from absorbing externally applied impacts appropriately. To give an example, assume that a vehicle equipped with the fender garnish hits an obstacle, and the obstacle then falls down the hood of the vehicle, applying a downward impact thereto. In this case, the vehicle may fail to absorb the impact adequately. This is because the hood cannot be bent sufficiently due to the stiffness of the fender garnish. To overcome this disadvantage, it can be conceived that the fender garnish is made of a flexible, soft material such as a rubber. However, it is not preferable that such a flexible, soft material is placed inside an engine room, because an engine room is typically exposed to high temperatures.

Patent document DE 100 63 582 A1 relates to an impact absorbing car body panel for a vehicle, having an upper boundary flange facing a hood, and a sustain element for taking up impact forces being arranged along and attached to the inside of the car along at least a part of the car body panel and being secured to the vehicle body. The sustainer element comprises a deformation member and a reinforcement member attached to the deformation member.

Patent document US 2002/0060474 A1 relates to a fender panel impact absorption structure having an impact absorption unit fastened to the end of a bent part of a fender panel and secured to an apron panel. A bent grove is formed in the impact absorption unit.

Taking the above description into account, the present invention has been conceived. An object of the present invention is to provide a fender garnish structure which enables the vehicle to absorb impacts applied downward to the hood appropriately, without using a flexible, soft material for the fender garnish.

According to a first aspect of the present invention, there is provided, a fender garnish structure comprising a garnish main body for covering a flange of a fender. In addition, the garnish main body is provided with at least one space forming means for creating a clearance between the flange and the garnish main body, at least one fixing means for securing the garnish main body to a vehicle body member being located near the fender, and at least one rupture triggering means for causing a breakage between the space forming means and the fixing means.

According to a second aspect of the present invention, there is provided, the fender garnish structure of the first aspect in which the space forming means comprises a rib.

According to a third aspect of the present invention, there is provided, the fender garnish structure of the first aspect in which the rupture triggering means is formed between the fixing means and the space forming means.

According to a fourth aspect of the present invention, there is provided, the fender garnish structure of the first aspect in which the rupture triggering means comprises a slit and a thin portion, the slit being formed on a side edge of the garnish main body, the thin portion being located adjacent to the slit and being thinner than its surrounding portions.

According to a fifth aspect of the present invention, there is provided, the fender garnish structure of the first aspect in which the rupture triggering means is made of a material having one or more holes.

According to a sixth aspect of the present invention, there is provided, the fender garnish structure of the first aspect in which the rupture triggering means is made of a material having one or more perforated lines.

According to a seventh aspect of the present invention, there is provided, the fender garnish structure of one of the first to sixth aspects in which an inlet of an engine air intake duct is coupled to the garnish main body, so that the inlet communicates with an interior of the fender.

According to an eighth aspect of the present invention, there is provided, a vehicle comprising the fender garnish structure of one of the first to seventh aspects.

According to a ninth aspect of the present invention, there is provided, use of the fender garnish structure of one of the first to seventh aspects as a vehicle.

### BRIEF DESCRIPTION OF THE DRAWINGS

For more complete understanding of the present invention and the advantages hereof, reference is now made to the following description taken in conjunction with the accompanying drawings wherein:
Fig. 1A is a plane view depicting a vehicle to which a fender garnish according to one embodiment of the present invention is attached;
Fig. 1B is an elevation view depicting the fender garnish;
Fig 2 is an enlarged perspective view depicting the detailed structure of the surrounding area of the fender garnish;
Fig. 3 is an enlarged view depicting the detailed front structure of the fender garnish;
Fig. 4A is a cross-sectional view taken along a line A-A of Fig. 3;
Fig. 4B is a cross-sectional view taken along a line B-B of Fig. 3;
Fig. 4C is a cross-sectional view taken along a line C-C of Fig. 3;
Fig. 4D is a cross-sectional view taken along a line D-D of Fig. 3;
Fig. 5 is an enlarged view depicting a detailed rear structure of the fender garnish;
Fig. 6A is a cross-sectional view taken along a line E-E of Fig. 5; and
Fig. 6B is a cross-sectional view taken along a line F-F of Fig. 5.

First, a description will be given below, of a fender garnish structure according to one embodiment of the present invention.

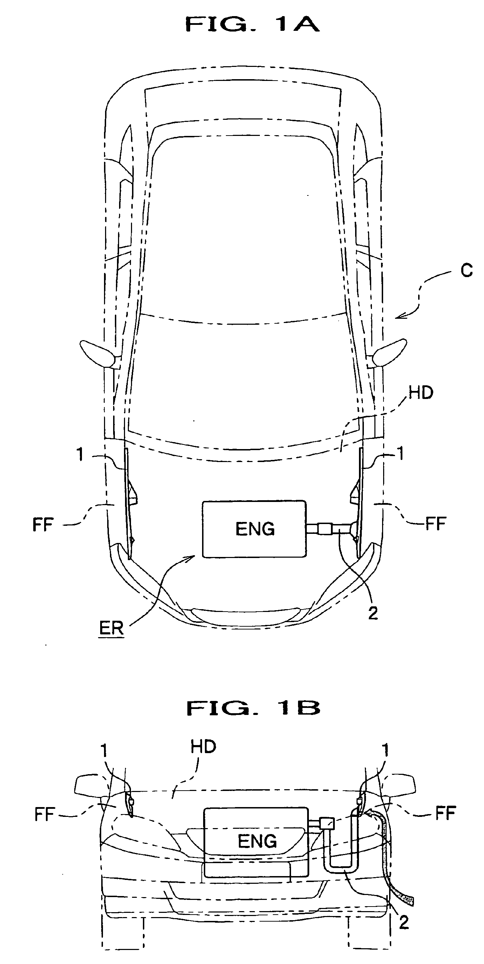

Referring to Figs. 1A and 1B, a vehicle C has front fenders FF on its both front sides. Furthermore, resinous fender garnishes 1 are attached to both upper, inner sides of the front fender FF. These garnishes contribute to the improved appearance of an area around an engine room ER. The left one of both fender garnishes 1 is coupled to an engine air intake duct 2 so that external air is supplied to the interior of the engine ENG. Both fender garnishes 1 are similar in structure except that the left one is equipped with the engine air intake duct 2. Therefore, in the following embodiment, only the structure of the left fender garnish 1 will be described, and the description of the right one will be omitted.

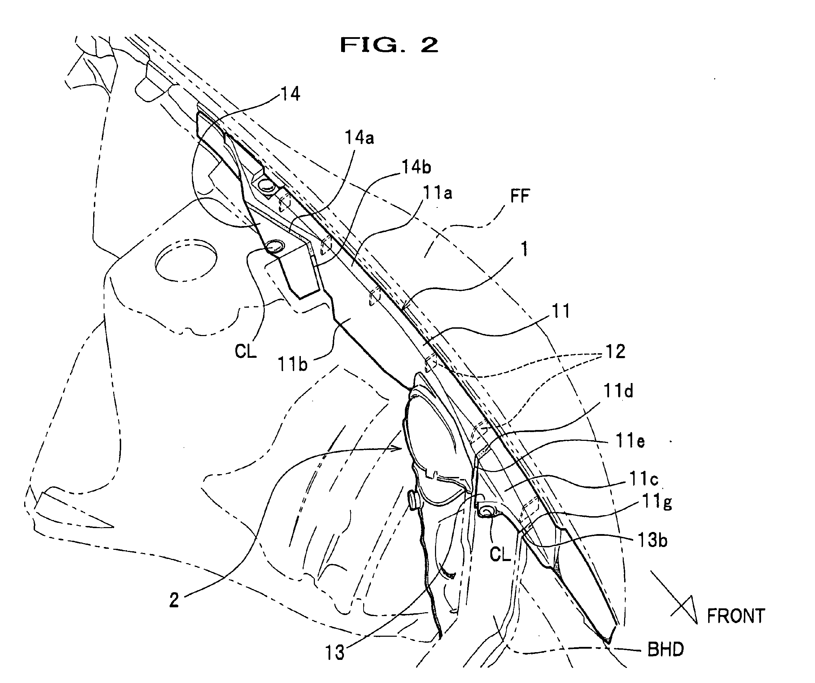

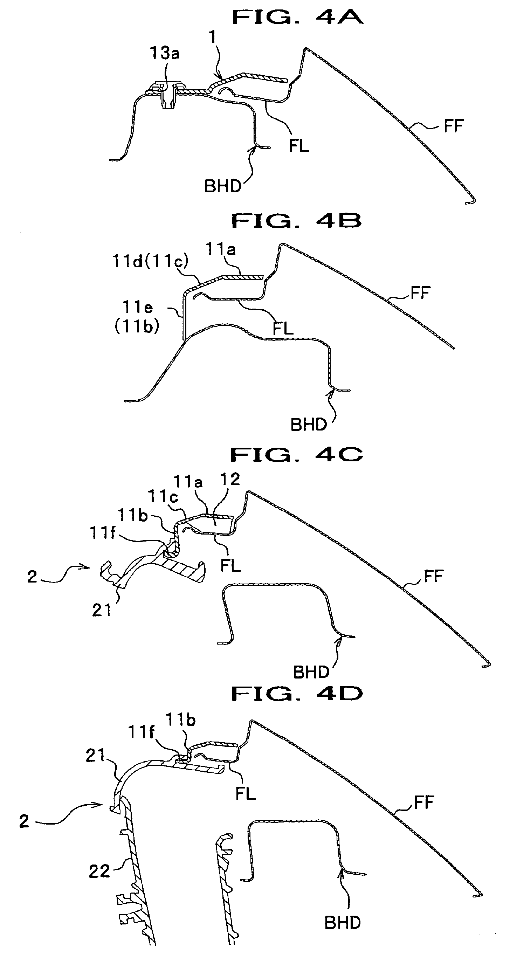

Referring to Fig. 2, the fender garnish 1 includes:
a) a garnish main body 11 covering a flange FL (see Fig. 4A) of the front fender FF;
b) multiple ribs 12 arranged under the garnish main body 11 at given intervals; and
c) fixtures 13 and 14 extending inward from the garnish main body 11 along the width of the vehicle C.
Herein, each of the two fixtures is represented by "a fixing means", and each of the ribs is represented by "a space forming means".

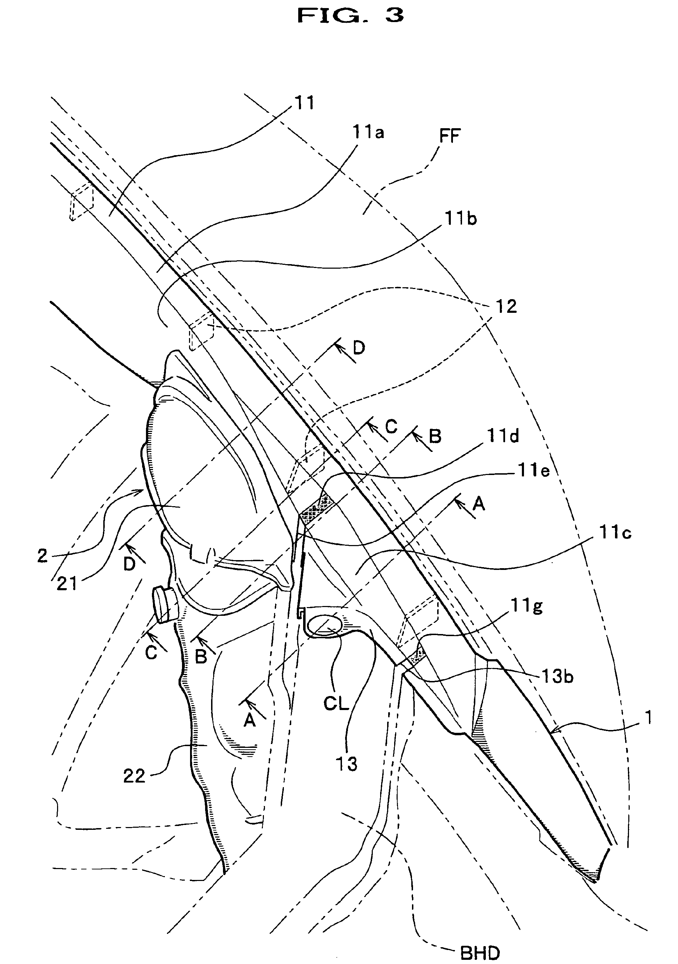

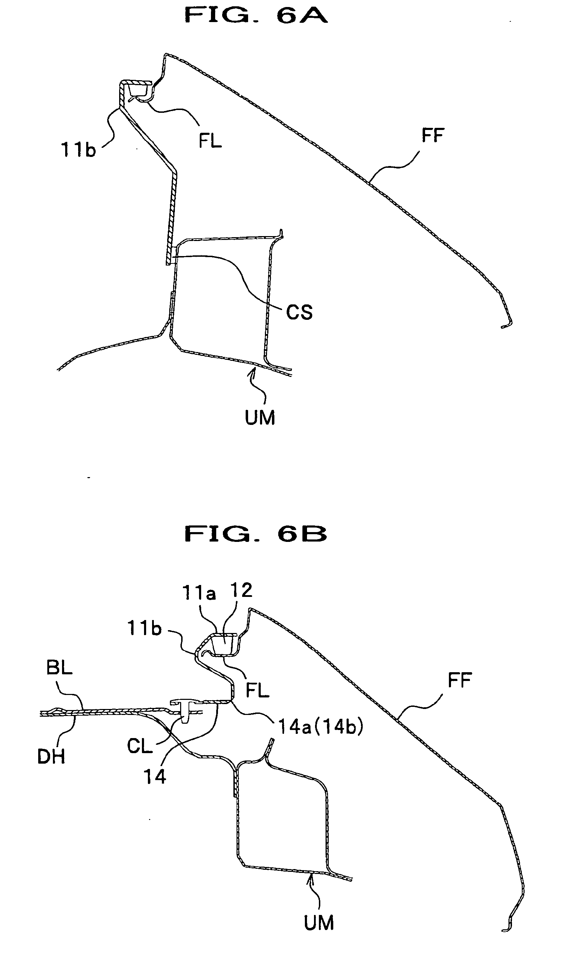

In this embodiment, the fixtures 13 and 14 are referred to as "a front fixture 13" and "a rear fixture 14", respectively. Under the fender garnish 1, there are a part of a bulk head (vehicle body member) BHD and an upper member UM. The part of the bulk head BHD bends in the shape of the letter "L", extending along the long side of the vehicle C (see Figs. 4A to 4D), and the upper member UM is coupled to the part of the bulk head, extending along the long side of the vehicle C (see Fig. 6). The garnish main body 11 includes an upper wall 11a and a side wall 11b. The upper wall 11a covers the upper surface of flange FL (see Figs. 4A to 4D) of the front fender FF, and the side wall 11b covers the side edge of the flange FL. Moreover, the cross-section of the body 11 is formed in the shape of the letter "L". Referring to Fig. 3, an inclined wall 11c is formed on a predetermined portion (near the front fixture 13) between the upper wall 11a and the side wall 11b. Furthermore, at the front and rear portions of the inclined wall 11c (around the bulk head BHD), thin-walled portions 11g and 11d are formed, which are both thinner than their neighboring portions.

Herein, a combination of the slit and the thin-walled portion is represented by "a rupture triggering means".

Now, a detailed description will be given below, of the side wall 11b, ribs 12, and fixtures 13 and 14 of the garnish main body 11. For convenience sake, each of these components will be divided into front and rear structures in the following description. First, the front structures will be described below with reference to Figs. 2 to 4D.

As shown in Fig. 2, the side wall 11b is formed extending from the rear end of the garnish main body 11 and reaching the rear end of the front fixture 13. Moreover, as shown in Figs. 3 to 4D, a slit 11e is formed at a portion to which the front fixture 13 is coupled. Further, this slit is formed below a thin-walled portion 11d, with facing downward. The front fixture 13 is provided with a hole 13a (see Fig. 4A) to which a clip CL for coupling the fender garnish 1 and the bulk head BHD is attached. In addition, a slit 13b is formed on an inner edge of the front fixture 13. This slit faces downward and adjacent to the thin-walled portion 11g. Behind the slit 11e of the side wall 11b, there is a mated flange 11f into which an engine air intake duct 2 is fitted (see Fig. 4C and 4D).

The engine air intake duct 2 is composed mainly of an inlet forming part 21 and an air delivery duct 22. The inlet forming part 21 is fitted into the mated flange 11f so as to be secured to the side wall 11b through a clip (not shown). The air delivery duct 22 is connected to the inlet forming part 21. Therefore, the inlet of the engine air intake duct 2 communicates with the interior of the front fender FF. This makes it possible to supply external cool air to the engine ENG (see Fig. 1) through the inner space of the front fender FF.

The ribs 12 are located more outward than the thin-walled portions 11d and 11g and the slits 11e and 13b. Accordingly, the thin-walled portions 11d and 11g and the slits 11e and 13b are all arranged between the ribs 12 and the front fixture 13 (i.e., the portion to which the clip CL is attached). Furthermore, the ribs 12 are projected downward from the upper wall 11a and on the side of the inclined wall 11c, as shown in Fig. 4C. This enables the upper wall 11a to be placed at a predetermined distance away from the flange FL of the front fender FF.

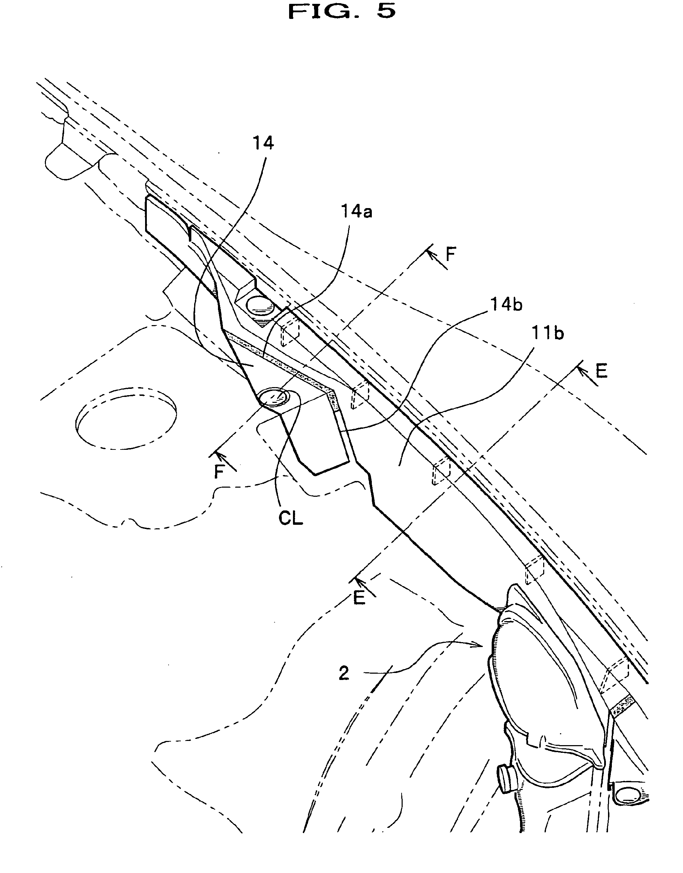

Second, a description will be given below, of the rear structure of the fender garnish 1 with reference to Figs. 5, 6A and 6B. In Fig. 5, the side wall 11b is provided between the rear portion of the engine air intake duct 2 and the rear fixture 14. In Fig. 6A, the lower portion of the side wall 11b is dipped toward the outside of the vehicle C by a predetermined length. Thus, the space between the flange FL of the front fender FF and the upper member UM is covered. In addition, between the lower end of the side wall 11b and the upper member UM, an elastically deformable cushion seal CS is placed.

As shown in Fig. 5, a thin-walled portion 14a is formed between the side wall 11b and the rear fixture 14. This thin-walled portion occupies about two-thirds of the whole area therebetween, and it is thinner than the neighboring portions. Furthermore, a slit 14b is formed close to the thin-walled portion 14a. The thin-walled portion 14a and the slit 14b are arranged between the ribs 12 and the portion of the rear fixture 14 where the clip CL is formed, as shown in Fig. 6B. Due to the fact that the ribs 12 are projected downward from the upper wall 11a, the upper wall 11a is placed at a predetermined distance away from the flange FL of the front fender FF. The rear fixture 14 is secured through the clip CL to a bracket (vehicle body member) BL fixed to the upper face of a damper housing (vehicle body member) DH.

Finally, a description will be give below, of a behavior of the fender garnish 1 according to one embodiment of the present invention. As shown in Fig. 1B, consider that the vehicle C collides with an obstacle, and the obstacle then falls down on the hood HD, applying a downward impact thereto. In this case, the whole or parts of the thin-walled portions 11g, 11d and 14a (see Fig. 2) of the fender garnish 1 are broken from fracture origins, that is, the slits 11e, 13b and 14b. This weakens the connection between the ribs 12 and the fixtures 13 and 14. Consequently, the garnish main body 11 is bent easily.

Due to the above behavior of the fender garnish 1, the following effects are achieved.
1) With the thin-walled portions 11g, 11d and 14a and the slits 11e, 13b and 14b, the garnish main body 11 is bend easily. Thus, the garnish main body 11 enables the vehicle C to absorb the impact applied downward to the hood HD appropriately, without using flexible, soft material for the fender garnish 1.
2) The garnish main body 11 is broken easily from fracture origins, that is, the slits 11e, 13b and 14b. This enables the vehicle C to absorb impacts applied downward to the hood HD sufficiently.
3) External cool air is delivered to the engine ENG through the engine air intake duct 2b, thus lowering the engine temperature.

Note that the present invention is not limited to the above embodiment, and various modifications and variations can be conceived. To given an example, the slits 11e, 13b and 14b and the thin-walled portions 11g, 11d and 14a may be replaced by materials with one or more holes, fragile materials, materials in which holes are arranged in a perforated line fashion, or combination thereof.

In the above embodiment, the fender garnish structure has been applied to the structure where the engine ENG is placed on the front of the vehicle C. However, this structure is not limited thereto. Alternatively, the fender garnish structure may be applied to a structure where the engine ENG is placed on the rear of the vehicle C.

## Claims

1. A fender garnish structure (1) comprising a garnish main body (11) for covering a flange (FL) of a fender (FF),
wherein the garnish main body (11) is provided with: at least one fixing means (13, 14) for securing the garnish main body (11) to a vehicle body member (BHD) being located near the fender (FF); and at least one rupture triggering means,
**characterized in that**
the garnish main body (11) is further provided with at least one space forming means (12) for creating a clearance between the flange (FL) and the garnish main body (11), wherein the rupture triggering means is formed between the space forming means (12) and the fixing means (13, 14), and
an inlet (21) of an engine air intake duct (2) is coupled to the garnish main body (11), so that the inlet (21) communicates with an interior of the fender (FF).

2. The fender garnish structure (1) as claimed in Claim 1,
wherein the space forming means (12) comprises a rib.

3. The fender garnish structure (1) as claimed in one of Claims 1 or 2,
wherein the rupture triggering means comprises a slit (11e, 13b, 14b) being formed on a side edge of the garnish main body (11), and a thin portion (11g, 11d, 14a) being located adjacent to the slit (11e, 13b, 14b) and being thinner than its surrounding portions.

4. The fender garnish structure (1) as claimed in one of Claims 1 to 3,
wherein the rupture triggering means is made of a material having one or more holes.

5. The fender garnish structure (1) as claimed in one of Claims 1 to 4,
wherein the rupture triggering means is made of a material in which holes are arranged in a perforated line fashion.

6. A vehicle comprising the fender garnish structure (1) as claimed in one of Claims 1 to 5.

7. Use of the fender garnish structure (1) as claimed in one of Claims 1 to 6 as a vehicle.

## Patentansprüche

1. Kotflügelbeschlagkonstruktion (1), umfassend einen Beschlaghauptkörper (11) zum Abdecken eines Kantenstücks (FL) eines Kotflügels (FF),
wobei der Beschlaghauptkörper (11) versehen ist mit:
zumindest einem Fixiermittel (13, 14) zum Befestigen des Beschlaghauptkörpers (11) an einem Fahrzeugkarosserieelement (BHD), das sich neben dem Kotflügel (FF) befindet; und zumindest einem Bruchauslösemittel,
**dadurch gekennzeichnet, dass**
der Beschlaghauptkörper (11) weiterhin mit zumindest einem Abstandbildungsmittel (12) zum Erstellen eines Abstands zwischen dem Kantenstück (FL) und dem Beschlaghauptkörper (11) ausgebildet ist, wobei das Bruchauslösemittel (12) zwischen dem Abstandausbildungsmittel (12) und den Fixiermitteln (13, 14) ausgebildet ist, und
eine Einlassöffnung (21) eines Motorluft-Ansaugekanals (2) mit dem Beschlaghauptkörper (11) gekoppelt ist, so dass die Einlassöffnung (21) mit einer Innenseite des Kotflügels (FF) in Verbindung steht.

2. Die Kotflügelbeschlagkonstruktion (1) gemäß Anspruch 1, wobei das Abstandsbildungsmittel (12) eine Rippe umfasst.

3. Kotflügelbeschlagkonstruktion (1) gemäß einem der Ansprüche 1 oder 2, wobei das Bruchauslösemittel einen Schlitz (113, 13b, 14b), der auf einer Seitenkante des Beschlaghauptkörpers (11) ausgebildet ist, und ein dünnes Teil (11g, 11d, 14a) neben dem Schlitz (11e, 13b, 14b), das dünner ist als die umgebenden Teile, umfasst.

4. Kotflügelbeschlagkonstruktion (1) gemäß einem der Ansprüche 1 bis 3, wobei das Bruchauslösemittel aus einem Material hergestellt ist, das ein oder mehrere Löcher aufweist.

5. Kotflügelbeschlagkonstruktion (1) gemäß einem der Ansprüche 1 bis 4, wobei das Bruchauslösemittel aus einem Material hergestellt ist, bei dem die Löcher in der Art einer perforierten Linie angeordnet sind.

6. Fahrzeug umfassend eine Kotflügelbeschlagkonstruktion (1) gemäß einem der Ansprüche 1 bis 5.

7. Verwenden der Kotflügelbeschlagkonstruktion (1) gemäß einem der Ansprüche 1 bis 6 als ein Fahrzeug.

## Revendications

1. Structure de garniture d'aile (1) comportant un corps principal de garniture (11) pour couvrir un rebord (FL) d'une aile (FF),
dans laquelle le corps principal de garniture (11) est muni : d'au moins un moyen de fixation (13, 14) pour fixer le corps principal de garniture (11) sur un élément de carrosserie de véhicule (BHD) positionné proche de l'aile FF), et d'au moins un moyen de déclenchement de rupture,
**caractérisée en ce que**
le corps principal de garniture (11) est en outre muni d'au moins un moyen formant un espace (12) pour créer un jeu entre le rebord (FL) et le corps principal de garniture (11), dans laquelle le moyen de déclenchement de rupture est formé entre le moyen formant un espace (12) et le moyen de fixation (13, 14), et
une entrée (21) d'un conduit d'admission d'air de moteur (2) est couplée au corps principal de garniture (11), de sorte que l'entrée (21) communique avec une partie intérieure de l'aile (FF).

2. Structure de garniture d'aile (1) selon la revendication 1, dans laquelle les moyens formant espace (12) comportent une nervure.

3. Structure de garniture d'aile (1) selon la revendication 1 ou 2, dans laquelle le moyen de déclenchement de rupture comporte une fente (11e, 13b, 14b) formée sur un bord latéral du corps principal de garniture (11), et une partie mince (11g, 11d, 14a) étant positionnée adjacente à la fente (11e, 13b, 14b), et étant plus mince que ses parties entourantes.

4. Structure de garniture d'aile (1) selon l'une quelconque des revendications 1 à 3, dans laquelle le moyen de déclenchement de rupture est réalisé en un matériau ayant un ou plusieurs trous.

5. Structure de garniture d'aile (1) selon l'une quelconque des revendications 1 à 4, dans laquelle le moyen de déclenchement de rupture est réalisé en un matériau dans lequel des trous sont agencés en une ligne de trous.

6. Véhicule comportant la structure de garniture d'aile (1) selon l'une quelconque des revendications 1 à 5.

7. Utilisation de la structure de garniture d'aile (1) selon l'une quelconque des revendications 1 à 6 sous la forme d'un véhicule.
